# DEMANDE DE BREVET EUROPEEN

(11) **EP 0 656 505 A1**
(43) Date de publication de la demande: **07.06.1995**
(21) Numéro de dépôt: 94402770.5
(22) Date de dépôt: 02.12.1994
(51) Int. Cl.: F16P 3/14, G08B 13/19, G08B 29/16, G08B 29/14

(54) **Installation de sécurité pour la détection d'une présence humaine dans des zones dangereuses**

(30) Priorité: 03.12.1993 FR 9314526
(71) Demandeur: JAY ELECTRONIQUE, F-38330 Montbonnot Saint Martin (FR)
(72) Inventeur: Givet, Jean-Bernard, F-38700 La Tronche (Isère) (FR)
(74) Mandataire: Taton, Gérard

(57) **Abrégé**

Installation caractérisée en ce qu'elle comprend n détecteurs infrarouges et au moins deux (1, 2) disposés et orientés pour détecter une présence humaine dans une même zone (S), un ensemble comparateur pour vérifier la concordance des détections des n détecteurs et une alarme déclenchée par l'ensemble comparateur (3) lorsque au maximum n-1 détecteurs détectent une présence humaine.

## Description

Les installations industrielles mettent souvent en oeuvre des équipements ou machines qui présentent des dangers pour les personnels qui les servent, qui circulent autour ou qui en assurent la maintenance.

Ces machines sont en général dotées de protections comprenant des parois rigides ou grillagées et des sas d'entrée pourvus soit de dispositifs matériels par exemple une porte, soit de dispositifs immatériels.

Ces dispositifs ont pour but de ne permettre un accès aux zones dangereuses que par les sas d'entrée ou de sortie ou par les zones de chargements et de déchargement des produits à traiter. Les dispositifs immatériels ne permettent cependant pas de distinguer, sauf à mettre en oeuvre des dispositifs complexes et peu fiables, le passage normal d'un objet ou d'un produit qui doit être amené ou évacué de la machine, d'une présence ou d'une intrusion humaine susceptible d'être à l'origine d'un accident.

Ainsi, l'exploitation de ces machines dangereuses est confrontée à deux types de difficultés relevant de contraintes sécuritaires, la première est de pouvoir interdire le chargement de produits alimentant la machine alors qu'une personne peut être happée ou poussée dans le corps dangereux de la machine, la seconde est qu'en phase de réglage des opérateurs doivent entrer dans les enceintes closes et être enfermés dans ces enceintes sans risquer des accidents.

La présente invention a notamment pour but de remédier à ces inconvénients et concerne à cet effet une installation de sécurité pour la détection d'une présence humaine dans des zones dangereuses, caractérisée en ce qu'elle comprend n détecteurs infrarouges et au moins deux, disposés et orientés pour détecter une présence humaine dans une même zone, un ensemble comparateur pour vérifier la concordance des détections des n détecteurs et une alarme déclenchée par l'ensemble comparateur lorsque au maximum n-1 détecteurs détectent une présence humaine.

Suivant une autre caractéristique de l'invention, le comparateur est établi de façon à autoriser un décalage maximum limité entre les instants de détection, par les détecteurs, d'une présence humaine dans la zone surveillée.

L'invention est représentée à titre d'exemple non limitatif sur les dessins ci-joints dans lesquels :
- la figure 1 est une vue latérale schématique d'un passage protégé par une installation conforme à l'invention,
- la figure 2 est une vue en coupe suivant A-A de la figure 1,
- la figure 3 est un schéma électrique général de l'installation,
- la figure 4 est le schéma synoptique du boîtier de surveillance du schéma électrique de la figure 1.

La présente invention a en conséquence pour but la mise au point d'une installation qui est capable, de manière sûre, d'effectuer une discrimination entre le passage ou la présence d'un objet T et le passage ou la présence d'une personne, en combinaison avec les fonctions de sécurité habituelles pour la protection des zones dangereuses visant, par exemple, à arrêter ou interdire la mise en route d'une machine lorsque l'installation détecte la présence d'une personne.

Suivant l'invention, il est prévu de mettre en oeuvre n détecteurs infrarouges du type passif et, par exemple deux, référencés 1 et 2 sur les dessins, ces détecteurs étant disposés et orientés pour détecter une présence humaine dans une même zone déterminée par l'angle S de façon que les signaux quasi-simultanés produits par ces détecteurs puissent être amenés à un ensemble comparateur de surveillance 3 pour déclencher une alarme X lorsque au maximum n-1 détecteurs détectent une présence humaine dans cette zone.

Ces détecteurs sont alimentés à partir d'une source de tension passant au travers du boîtier 3.

Cette disposition permet un fonctionnement sécuritaire de l'installation dans la mesure ou si l'un au moins des détecteurs présente une anomalie de fonctionnement, un signal apparaît sur la borne 13 et il est alors possible d'en tirer toutes les conséquences utiles et, par exemple, d'arrêter les machines, de déclencher une alarme, de produire un affichage, etc. La détection par un ou plusieurs détecteurs fera apparaître un signal sur la borne 13.

Une vérification du bon fonctionnement de l'installation pourra être effectuée automatiquement au début de chaque fonctionnement mais elle pourra également être effectuée à partir d'une commande de test 3₁ agissant cyliquement, prévue dans le bloc de surveillance et assurant une détection artificielle par les détecteurs.

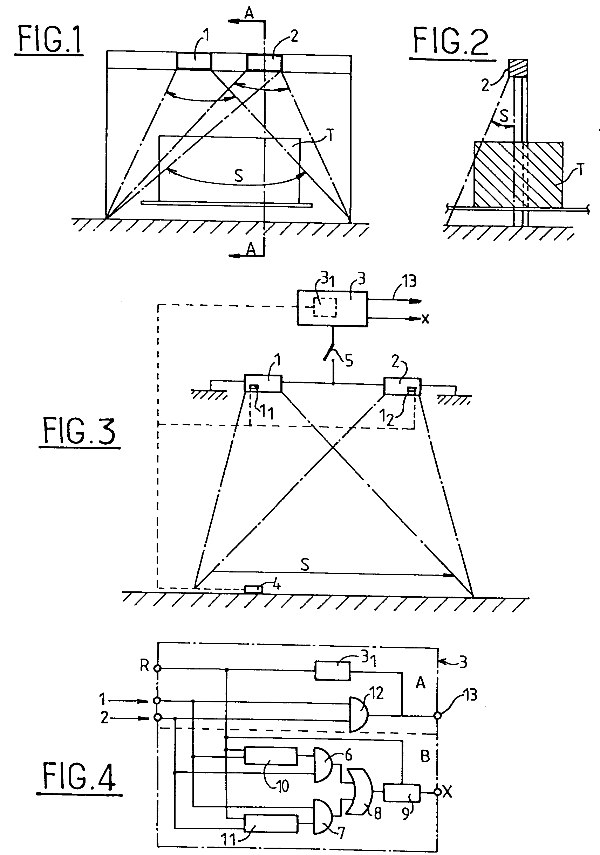

Ainsi, par exemple, comme cela est représenté sur la figure 3, cette détection artificielle pourra être obtenue en disposant à l'intérieur des boîtiers des détecteurs 1 et 2 une source de chaleur 1₁, 1₂ de façon à produire dans la totalité des détecteurs un signal de déclenchement se traduisant sur les zones de surveillance par un effet similaire à celui produit par les n détecteurs lors d'une détection simultanée d'une présence humaine.

Ainsi, si l'une des sources de chaleur n'assure pas le déclenchement de la totalité des détecteurs infrarouges, dans ce cas le boîtier de surveillance 3 déclenche l'alarme X.

Egalement, cette détection artificielle pourra être obtenue en déclenchant par la commande de test 3₁ la mise sous tension d'une source de chaleur 4 disposée dans la zone commune surveillée S, cette source de chaleur devant alors produire sur les détecteurs les mêmes effets que les sources 1₁, 1₂ disposées dans chaque détecteur.

Ces sources de chaleur 1₁, 1₂ et 4 pourront être constituées par des leurres simulant la présence d'une personne.

Une autre méthode de test pourrait consister, comme cela est représenté sur la figure 3, à couper l'alimentation puis à remettre sous tension les détecteurs 1 et 2 par la manoeuvre de l'interrupteur 5.

Le comparateur prévu à l'intérieur du boîtier de surveillance 3 afin de déclencher l'alarme lorsque les n ou n-1 détecteurs sont déclenchés, est établi de façon à autoriser un décalage maximum "dt", entre les instants de détection, par les différents détecteurs, d'une présence humaine dans la zone surveillée. Ce décalage "dt" est déterminé pour tenir compte des temps de détection des détecteurs infrarouges 1 et 2 qui peuvent être différents.

Ainsi, suivant la figure 2, le boîtier de surveillance 3 comprend un comparateur constitué des portes logiques 6, 7 et 8 qui reçoivent les signaux de commande des détecteurs 1 et 2 afin de déclencher l'alarme X par l'intermédiaire d'un étage mémoire 9.

Les portes logiques 6 et 7 sont également reliées à l'organe de commande de test 3₁ par des étages de temporisation 10 et 11 réglés pour autoriser le décalage maximum "dt" dans les instants de déclenchement des détecteurs 1 et 2.

Ces étages de temporisation 10 et 11 sont également reliés aux détecteurs 1 et 2 respectivement.

Les détecteurs 1 et 2 sont de préférence à sécurité positive, c'est-à-dire que leur sortie est active en l'absence de détection, afin que la coupure de leur alimentation produise le déclenchement de l'alarme lors de la mise en oeuvre de la fonction de test.

On constate donc que l'installation conforme à l'invention permet d'assurer la mise en redondance des détecteurs afin qu'elle signale comme une présence humaine le défaut de fonctionnement d'un des détecteurs en assurant de ce fait le déclenchement de l'alarme.

Suivant la figure 4, la partie A du boîtier de surveillance 3 opère la prise en compte des informations de détection et les regroupe dans une porte logique 12 afin d'activer la sortie 13 du boîtier dès l'apparition d'une détection venant de l'un et/ou de l'autre détecteurs.

La partie B du boîtier 3 effectue la mise en redondance des détecteurs et vérifie par les portes 6, 7 et 8 que leurs actions sont bien concordantes et simultanées dans la plage de tolérance du délai "dt" déterminé par les étages 10 et 11.

La non-concordance des détecteurs au-delà du temps "dt" active l'alarme X, cette fonction étant mémorisée par la mémoire 9 qui ne pourra être annulée que par l'actionnement de la commande de test 3₁ du boîtier 3 assurant la remise à zéro de l'installation (borne R) et à condition que les n détecteurs soient dans l'état de fonctionnement normal.

Cette fonction de test pourra être à déclenchement automatique ou, au contraire, être à la disposition de l'utilisateur et sous la dépendance du cycle de fonctionnement de la machine dangereuse.

Les différentes fonctions logiques de l'installation sont obtenues à partir de relais à contact guidés afin de définir de manière exhaustive les cas possibles lors de défaillances.

Suivant le niveau de sécurité à atteindre, on peut également réaliser les fonctions logiques du boîtier 3 à partir d'opérateurs logiques et électroniques conventionnels ou encore à l'aide de circuits programmés suivant la connaissance que l'on doit avoir des modes de défaillance.

## Revendications

**1)** Installation de sécurité pour la détection d'une présence humaine dans des zones dangereuses, caractérisée en ce qu'elle comprend n détecteurs infrarouges et au moins deux (1, 2) disposés et orientés pour détecter une présence humaine dans une même zone (S), un ensemble comparateur pour vérifier la concordance des détections des n détecteurs et une alarme (X) déclenchée par l'ensemble comparateur (3) lorsque au maximum n-1 détecteurs détectent une présence humaine.

**2)** Installation conforme à la revendication 1, caractérisée en ce que le comparateur (3) est établi de façon à autoriser un décalage maximum limité (dt) entre les instants de détection, par les détecteurs, d'une présence humaine dans la zone surveillée (S).

**3)** Installation conforme à l'une quelconque des revendications précédentes, caractérisée en ce qu'elle comporte des moyens de détection artificiels (1₁, 1₂, 4, 5) d'une présence humaine dans la zone surveillée.

**4)** Installation conforme à la revendication 3, caractérisée en ce que les moyens de détection artificiels (1₁, 1₂, 4) sont disposés pour produire dans l'ensemble comparateur un signal de déclenchement d'effet similaire à celui produit par les n détecteurs lors de la détection simultanée d'une présence humaine.

**5)** Installation conforme à la revendication 3, caractérisée en ce que les moyens de détection artificiels sont constitués par la mise sous tension d'une source de chaleur (4) disposée dans la zone de détection commune (S) des détecteurs.

**6)** Installation conforme à la revendication 3, caractérisée en ce que les moyens de détection artificiels (5) sont constitués par un interrupteur disposé pour couper puis remettre sous tension les détecteurs.
